# EUROPEAN PATENT APPLICATION

(11) **EP 4 290 913 A1**
(43) Date of publication of application: **13.12.2023**
(21) Application number: 22749639.5
(22) Date of filing: 31.01.2022
(51) Int. Cl.: H04W 16/32, H04W 72/04, H04W 92/20, H04W 76/15

(54) **WIRELESS BASE STATION, WIRELESS COMMUNICATION SYSTEM, AND WIRELESS COMMUNICATION METHOD**

(30) Priority: 03.02.2021 JP 2021015568
(71) Applicant: NTT DOCOMO, INC., Chiyoda-ku Tokyo 100-6150 (JP)
(72) Inventor: MIN, Tianyang, Tokyo 100-6150 (JP)
(74) Representative: Hoffmann Eitle
(86) International application number: PCT/JP2022/003474
(87) International publication number: WO 2022/168767

(57) **Abstract**

A radio base station receives an inactive indication of the secondary cell group from the terminal. When receiving the inactive indication, the radio base station transmits a message including the inactive indication of the secondary cell group to the secondary node.

## Description

### [Technical Field]

The present invention relates to a radio base station, a radio communication system and a radio communication method that support activation and deactivation of secondary cell groups.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, in Release -17 of 3 GPP, expansion of Multi-RAT Dual Connectivity (MR-DC) is being considered (Non-Patent Literature 1). Specifically, it is contemplated to support an efficient activation/deactivation mechanism for secondary cell groups (SCG) and secondary cells (SCells).

### [Citation List]

### [Non-Patent Literature]

Non-Patent Literature 1 "Revised WID on Further Multi-RAT Dual-Connectivity enhancements", RP -201040, 3 GPP TSG RAN Meeting # 88 e, 3 GPP, June 2020

### [Summary of Invention]

However, since it is not clear under what conditions the activation/deactivation of the SCG should be performed, the terminal and the radio base station cannot activate (trigger) the activation/deactivation of the SCG at an appropriate timing.

Accordingly, the following disclosure has been made in view of such a situation, and it is an object of the present invention to provide a radio base station, a radio communication system, and a radio communication method capable of more reliably performing efficient activation/deactivation of an SCG.

One aspect of the present disclosure is a terminal (UE 200) including a transmission unit (RRC processing unit 220) that transmits a message including a deactivation request of a secondary cell group to a network, and a control unit (control unit 240) that executes deactivation of the secondary cell group based on transmission of the deactivation request.

One aspect of the present disclosure is a radio base station (For example, eNB 100 A) including a control unit (control unit 140) that determines whether or not deactivation of a secondary cell group is required based on an amount of data directed to a terminal (UE 200) at the master node, and a transmission unit (RRC processing unit 120 and DC processing unit 130) that, when deactivation is required, transmits a message including a request to deactivate the secondary cell group.

One aspect of the present disclosure is a radio base station (For example, gNB 100 B) including a control unit (control unit 140) that determines whether or not deactivation of a secondary cell group is necessary based on an amount of data for a terminal (UE 200) in a secondary node, and a transmission unit (RRC processing unit 120 and DC processing unit 130) that transmits a message including a deactivation request of the secondary cell group when the amount of data falls below a threshold value.

One aspect of the present invention is a radio base station (For example, eNB 100 A) including a reception unit (DC processing unit 130) that receives an inactive indication of a secondary cell group from a terminal (UE 200), and a transmission unit (DC processing unit 130) that, when the inactive indication is received, transmits a message including the inactive indication of the secondary cell group to a secondary node.

One aspect of the present invention is a radio base station (For example, gNB 100 B) including a reception unit (DC processing unit 130) that receives a message including an inactive indication of a secondary cell group, and a control unit (control unit 140) that, when the message is received, stops transmitting an activation request for the secondary cell group until a predetermined time elapses.

### [Brief Description of Drawings]

[FIG. 1] FIG. 1 is an overall schematic diagram of a radio communication system 10.
[FIG. 2] FIG. 2 is a functional block diagram of the eNB 100 A.
[FIG. 3] FIG. 3 is a functional block diagram of the UE 200.
[FIG. 4] FIG. 4 is a diagram showing an example of a communication sequence according to the SCG deactivation/activation procedure according to the operation example 1.
[FIG. 5] FIG. 5 shows MN initiated SCG deactivation/MN initiated SCG according to operation example 2.
[FIG. 6] FIG. 6 shows an SN initiated SCG deactivation/SN initiated SCG according to operation example 3.
[FIG. 7] FIG. 7 is a diagram showing a configuration example (unit 1) of a MAC-CE according to an operation example.
[FIG. 8] FIG. 8 is a diagram showing a configuration example (unit 2) of a MAC-CE according to an operation example.
[FIG. 9] FIG. 9 is a diagram showing a configuration example (part) of the RRC Reconfiguration.
[FIG. 10] FIG. 10 is a diagram showing a partial configuration of CellGroupConfig.
[FIG. 11] FIG. 11 is a diagram showing a partial configuration of CG-ConfigInfo.
[FIG. 12] FIG. 12 is a diagram showing a configuration example (part) of the RRC Connection Reconfiguration.
[FIG. 13] FIG. 13 shows a partial configuration of an S-NODE MODIFICATION REQUEST.
[FIG. 14] FIG. 14 shows a partial configuration of the S-NODE MODIFICATION REQUIRED.
[FIG. 15] FIG. 15 shows UE autonomously triggered SCG deactivation according to operation example 4.
[FIG. 16] FIG. 16 shows an example of the hardware configuration of the eNB 100 A, gNB 100 B and UE 200.

### [Modes for Carrying out the Invention]

Exemplary embodiments of the present invention are explained below with reference to the accompanying drawings. Note that, the same or similar reference numerals have been attached to the same functions and configurations, and the description thereof is appropriately omitted.

Exemplary embodiments of the present invention are explained below with reference to the accompanying drawings. Note that, the same or similar reference numerals have been attached to the same functions and configurations, and the description thereof is appropriately omitted.

### (1)Overall schematic configuration of the radio communication system

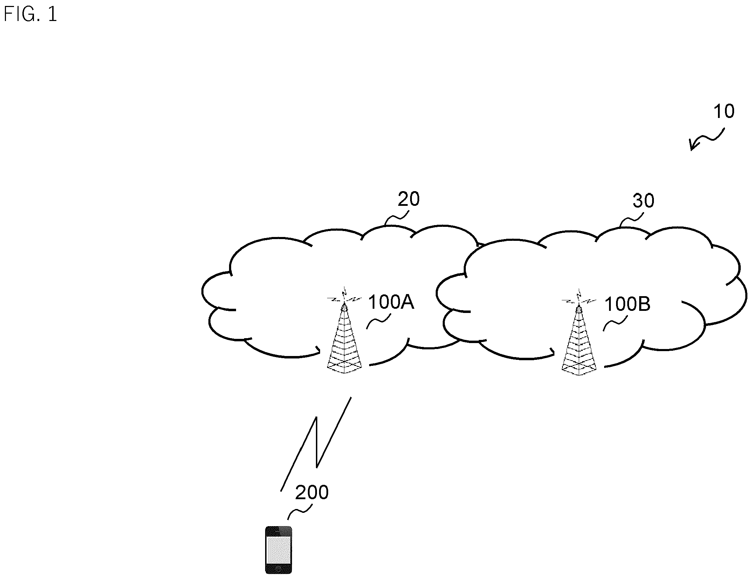

FIG. 1 is an overall schematic configuration diagram of a radio communication system 10 according to this embodiment. The radio communication system 10 is radio communication system according to Long Term Evolution (LTE) and 5G New Radio (NR). Note that LTE may be referred to as 4G and NR may be referred to as 5G. The radio communication system 10 may also be a radio communication system following a scheme called Beyond 5G, 5G Evolution or 6 G.

LTE and NR may be interpreted as radio access technologies (RAT), and in this embodiment, LTE may be referred to as a first radio access technology and NR may be referred to as a second radio access technology.

The radio communication system 10 includes the Evolved Universal Terrestrial Radio Access Network 20 (E-UTRAN 20) and the Next Generation-Radio Access Network 30 (hereinafter NG RAN 30). The radio communication system 10 also includes a terminal 200 (UE 200, User Equipment).

The E-UTRAN 20 includes an eNB 100 A which is a radio base station according to LTE. NG RAN 30 includes gNB 100 B which is a radio base station in accordance with 5 G (NR). The E-UTRAN 20 and the NG RAN 30 (which may be eNB 100 A or gNB 100 B) may simply be referred to as a network.

The eNB 100 A, the gNB 100 B, and the UE 200 can support carrier aggregation (CA) using a plurality of component carriers (CCs), dual connectivity for simultaneously transmitting component carriers between a plurality of NG-RAN nodes and the UE, and the like.

The eNB 100 A, gNB 100 B and UE 200 perform radio communication via a radio bearer, specifically, a Signalling Radio Bearer (SRB) or a Data Radio Bearer (DRB).

In this embodiment, the eNB 100 A configures the master node (MN) and the gNB 100 B configures the secondary node (SN) to execute Multi-Radio Dual Connectivity (MR-DC), specifically, E-UTRA-NR Dual Connectivity (EN-DC).

That is, the UE 200 corresponds to dual connectivity connecting the eNB 100 A and the gNB 100 B.

The eNB 100 A is included in the master cell group (MCG), and the gNB 100 B is included in the secondary cell group (SCG). That is, the gNB 100 B is an SN included in the SCG.

The eNB 100 A and gNB 100 B may be referred to as radio base stations or network devices.

The radio communication system 10 also supports the activation/deactivation of SCGs (which may be interpreted as SCells). For example, radio communication system 10 may support signaling to achieve efficient activation/deactivation of 1 SCG and/or SCell.

The MN initiated SN modification procedure may be used to support SCG (non-activation) activation, and the SN may decide to accept or reject the SCG (non-activation) activation request after receiving the SN modification request.

The activation notification sent from the SN to the MN may also be used by the MN to make a final decision regarding the SCG (non-activation) activation. For example, an information element (IE) for new SCG (deactivation) activation may be added.

### (2)Function block configuration of radio communication system

Next, the functional block configuration of radio communication system 10 will be described. Specifically, the functional block configurations of the eNB 100 A and the UE 200 will be described.

### (2.1)eNB100A

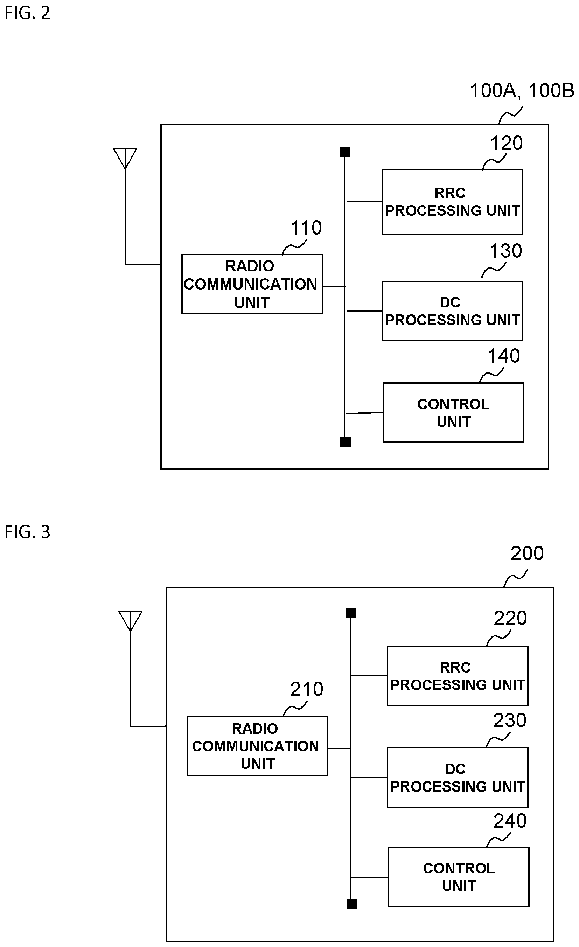

FIG. 2 is a functional block diagram of the eNB 100 A. As shown in FIG. 2, the eNB 100 A includes a radio communication unit 110, an RRC processing unit 120, a DC processing unit 130, and a control unit 140. Note that the gNB 100 B may have a block configuration substantially similar to that of the eNB 100 A, although the corresponding communication system is different.

The radio communication unit 110 transmits a downlink signal (DL signal) in accordance with LTE. The radio communication unit 110 receives an uplink signal (UL signal) in accordance with LTE.

The RRC processing unit 120 executes various processes in the radio resource control layer (RRC). Specifically, the RRC processing unit 120 can transmit the RRC Reconfiguration to the UE 200. The RRC processing unit 120 can receive the RRC Reconfiguration Complete, which is a response to the RRC Reconfiguration, from the UE 200.

In this embodiment, the eNB 100 A supports LTE, but in this case, the name of the RRC message may be RRC Connection Reconfiguration or RRC Connection Reconfiguration Complete.

When deactivation of the SCG is required, the RRC processing unit 120 may send a message including a request to deactivate the SCG. In this embodiment, the RRC processing unit 120 may constitute a transmission unit.

Specifically, the RRC processing unit 120 may transmit an RRC Reconfiguration in a state in which the secondaryCellGroupState or mrdc-SecondaryCellGroupState has been deactivated to the UE 200. The RRC processing unit 120 can transmit/receive various messages of the RRC to/from the UE 200 or the gNB 100 B.

The DC processing unit 130 executes processing related to dual connectivity, specifically, Multi-RAT Dual Connectivity (MR-DC). In this embodiment, since the eNB 100 A supports LTE and the gNB 100 B supports NR, the DC processing unit 130 may execute processing related to E-UTRA-NR Dual Connectivity (EN-DC). The type of DC is not limited, and may correspond to, for example, NR-E-UTRA Dual Connectivity (NE-DC) or NR-NR Dual Connectivity (NR-DC).

The DC processing unit 130 can transmit/receive a message specified in the 3GPP TS 37.340 or the like, and execute processing related to setting and releasing DC between the eNB 100 A, the gNB 100 B and the UE 200.

In particular, in this embodiment, when deactivation of the SCG is required, the DC processing unit 130 may transmit a message including a request to deactivate the SCG. In this embodiment, the DC processing unit 130 may constitute a transmission unit.

Specifically, the DC processing unit 130 may transmit a medium access control layer (MAC) message instructing the SCG deactivation request to the UE 200. More specifically, the DC processing unit 130 may transmit a MAC-CE (Control Element) indicating a request to deactivate the SCG to the UE 200.

Alternatively, the DC processing unit 130 may transmit a message containing a request to deactivate the SCG to the gNB 100 B (SN) .

When the amount of data for the UE 200 at the SN falls below a preset threshold value, the DC processing unit 130 may transmit a message containing a request to deactivate the SCG to the gNB 100 B (SN) .

The DC processing unit 130 may receive an inactive indication of the SCG from the UE 200. In the present embodiment, the DC processing unit 130 may constitute a reception unit. Specifically, if the UE 200 autonomously deactivates the SCG for any reason (For example, overheating), the DC processing unit 130 may receive a message including an inactive indication indicating that the SCG is deactivated. The message may be an upper layer such as an RRC or a MAC layer.

When the DC processing unit 130 receives the inactive indication, it may transmit a message including the inactive indication of the SCG to the SN (For example, gNB 100 B). In this embodiment, the DC processing unit 130 may configure a transmission unit for transmitting a message including an inactive indication to the SN.

Specifically, the DC processing unit 130 may send a message including information indicating that the SCG is deactivated, for example, an S-NODE MODIFICATION REQUEST (which may be referred to as an SN Modification request) to the SN.

The DC processing unit 130 may also transmit a message (S-NODE MODIFICATION REQUEST) containing timer information (which may be called a waitTimer) used to wait for transmission of the SCG activation request (For example, SCG activation request).

The control unit 140 controls each functional block constituting the eNB 100 A. In particular, in the present embodiment, the control for adding or changing the secondary node is executed.

More specifically, the control unit 140 may determine whether or not deactivation of the SCG is necessary based on the amount of data for the UE 200 in the master node (MN).

Alternatively, the control unit 140 may determine whether deactivation of the SCG is necessary based on the amount of data for the UE 200 at the secondary node (SN).

The amount of data for the UE 200 may be at least one of user data transmitted from the UE 200 to a destination via a network and data transmitted from the destination to the UE 200.

When the amount of data falls below a predetermined threshold value, the control unit 140 may determine that deactivation of the SCG is necessary. The control unit 140 may also determine that activation of the SCG is necessary when the amount of data exceeds a predetermined threshold value (which does not necessarily have to coincide with the determination for deactivation). The amount of data may be based on the number of PDU (Protocol Data Unit) sessions.

In this embodiment, the channel includes a control channel and a data channel. The control channels include PDCCH (Physical Downlink Control Channel), PUCCH (Physical Uplink Control Channel), PRACH (Physical Random Access Channel), PBCH (Physical Broadcast Channel), and the like.

The data channels include PDSCH (Physical Downlink Shared Channel) and PUSCH (Physical Uplink Shared Channel).

The reference signals include a Demodulation reference signal (DMRS), a Sounding Reference Signal (SRS), a Phase Tracking Reference Signal (PTRS), and a Channel State Information-Reference Signal (CSI-RS). The data may refer to data transmitted via a data channel.

When the eNB 100 A constitutes an SN, control unit 140 may determine that the SCG needs to be deactivated when data transmission/reception via a radio bearer (SN terminated bearer) terminated at the SN is completed.

If the eNB 100 A constitutes an SN (or if the gNB 100 B constitutes an SN), the DC processing unit 130 may receive a message (For example, S-NODE MODIFICATION REQUEST (which may be referred to as SN Modification request)) including an inactive indication of the SCG. In this case, the DC processing unit 130 may configure a reception unit for receiving a message including an inactive indication of the SCG.

When the control unit 140 receives a message containing an inactive indication of the SCG, it may stop sending the SCG activation request until a predetermined time has elapsed. For example, when the DC processing unit 130 receives a message (S-NODE MODIFICATION REQUEST) containing timer information (which may be referred to as a waitTimer), control unit 140 need not transmit an SCG activation request (For example, SCG activation request) until a predetermined time (predetermined time) set based on the timer information has elapsed.

### (2.2)UE200

FIG. 3 is a functional block diagram of the UE 200. As shown in FIG. 3, the UE 200 includes a radio communication unit 210, an RRC processing unit 220, a DC processing unit 230, and a control unit 240.

The radio communication unit 210 transmits an uplink signal (UL signal) in accordance with LTE or NR. The radio communication unit 210 receives an uplink signal (UL signal) in accordance with LTE. That is, the UE 200 can access the eNB 100 A (E-UTRAN 20) and the gNB 100 B (NG RAN 30), and can support dual connectivity (Specifically, EN-DC).

The RRC processing unit 220 executes various processes in the radio resource control layer (RRC). Specifically, the RRC processing unit 220 can transmit and receive messages of the radio resource control layer.

As described above, the RRC processing unit 220 can receive the RRC Reconfiguration from the network, specifically the E-UTRAN 20 (or NG RAN 30). The RRC processing unit 220 can transmit the RRC Reconfiguration Complete, which is a response to the RRC Reconfiguration, to the network.

The RRC processing unit 220 may also transmit a message including a SCG deactivation request to the network. In this embodiment, the RRC processing unit 220 may constitute a transmission unit.

For example, the RRC processing unit 220 may transmit UEAssistanceInformation including an instruction of deactivate SCG (deactivation request) in the field of overheating Assistance to the network.

The DC processing unit 230 executes processing related to dual connectivity, specifically, MR-DC. As described above, in the present embodiment, the DC processing unit 230 may execute processing relating to EN-DC, but may correspond to NE-DC and/or NR-DC.

The DC processing unit 230 accesses the eNB 100 A and the gNB 100 B, respectively, and can execute setting in a plurality of layers (Media access control layer (MAC), radio link control layer (RLC), and packet data convergence protocol layer (PDCP), etc.) including RRC.

Further, the DC processing unit 230 executes control and data transmission/reception related to the MR-DC by using a plurality of types of radio bearers, specifically, SRB and DRB as described above.

The SRB includes the SRB 0 ~ 3, and the SRB 0 ~ 3 may be defined as follows.

▪SRB0 is a radio bearer for RRC messages using CCCH (Common Control Channel) logical channels.
▪SRB1: A radio bearer for RRC messages (which may include piggybacked NAS messages) and NAS messages before the establishment of SRB2, which uses a DCCH (Dedicated Control Channel) logical channel.
▪SRB2 is a radio bearer for NAS messages using all DCCH logical channels. SRB2 has a lower priority than SRB1 and is always configured by the network after security is activated.
▪SRB 3: UE 200 is a radio bearer for a specific RRC message in the MR-DC state and uses a DCCH logical channel.

The DC processing unit 230 may transmit a message including a deactivation request to the SN when a radio bearer for a specific message in the dual connectivity state of the UE 200 is configured. Here, as the radio bearer for the specific message in the dual connectivity state, the above-described SRB3 may be an object.

The control unit 240 controls each functional block constituting the UE 200. In particular, in the present embodiment, the control unit 240 controls activation/deactivation of the SCG (SCell).

Specifically, the control unit 240 performs SCG deactivation based on the transmission of an SCG deactivation request to the network.

More specifically, the control unit 240 performs deactivation of the SCG in coordination with the network (MN and/or SN) after transmitting UEAssistanceInformation containing an indication of deactivate SCG in the overheating Assistance field.

### (3)Operation of radio communication system

Next, the operation of radio communication system 10 will be described. Specifically, an operation related to efficient activation/deactivation of SCG and/or SCell will be described.

In the operation example 1 ~ 3 described below, the timing at which the activation/deactivation of the SCG is activated (triggered) is clear, and the eNB 100 A, gNB 100 B, and UE 200 execute the activation/deactivation of the SCG at this timing.

### (3.1) Operation example 1

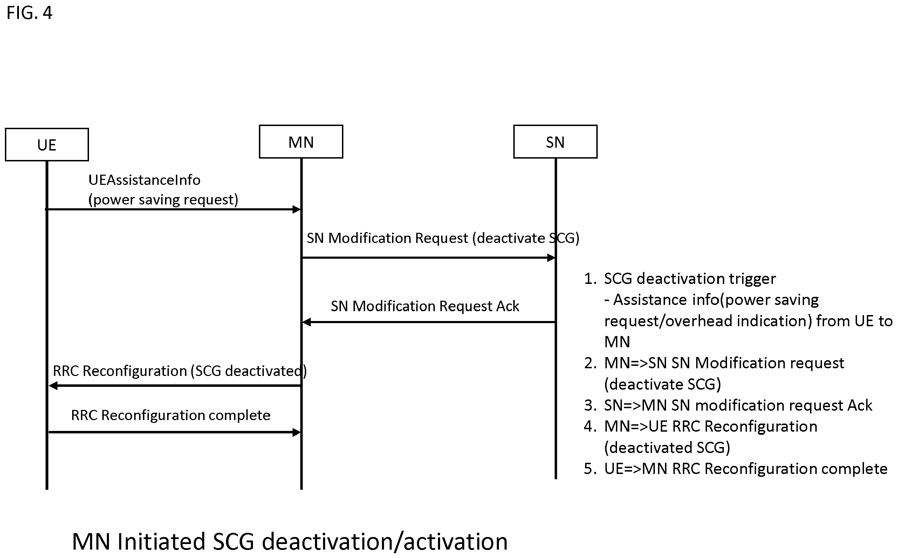

FIG. 4 shows an example of a communication sequence according to the SCG deactivation/activation procedure according to the operation example 1. Specifically, FIG. 4 shows an example of a communication sequence according to the MN initiated SCG deactivation/activation procedure.

In this operation example, the UE 200 leads the deactivation of the SCG. As shown in FIG. 4, the UE 200 can send UEAssistanceInformation containing information about the power saving request (step 1).

Here, the UE 200 may transmit the UEAssistanceInformation including the indication of deactivate SCG in the overheating Assistance to the MN. Deactivation of the SCG is performed according to the UEAssistanceInformation (step 2 - 5).

Here, if the SRB 3 is not configured, the UE 200 may send an indication of the deactivate SCG to the MN, and the MN may decide to deactivate the SCG.

The MN may deactivate the SCG in any of the following ways:.

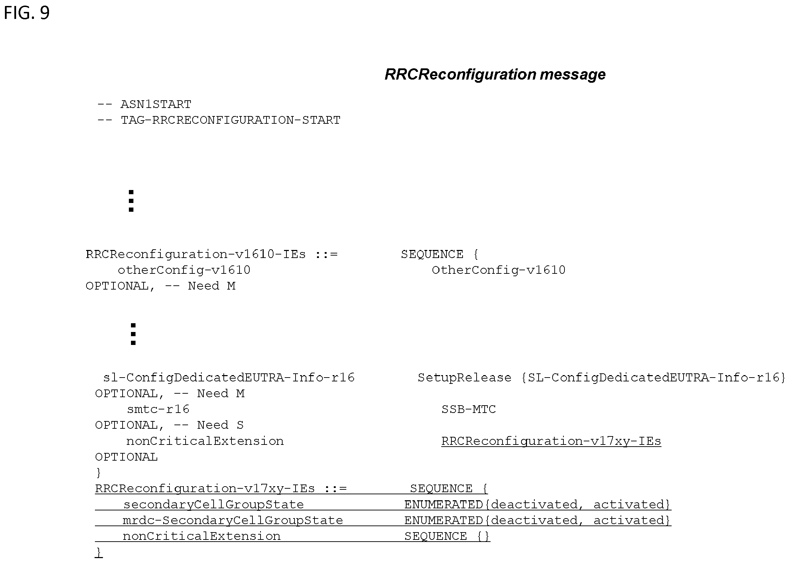

▪The MN deactivates the secondaryCellGroupState or mrdc-SecondaryCellGroupState in the RRC Reconfiguration and sends it to the UE 200 (see FIG. 9).
▪The MN sends an S-NODE MODIFICATION REQUEST (Deactivate SCG IE and CGConfigInfo in deactivate SCG IE contains deactivate SCG) to the SN to request the SN to deactivate the SCG.

SN configures secondaryCellGroupstate in RRC Reconfiguration to deactivated (or deactivate SpCellState in cellGroupConfig) and sends SN Modification request Ack (Include SN RRCReconfiguration in scg-CellGroupConfig of CG-Config) back to MN. The SN MAY return an SN Modification request Reject (reject SCG deactivation).

When the Ack is received from the SN, the MN may send an RRC Reconfiguration (encapsulated SN RRC Reconfiguration) to the UE 200.

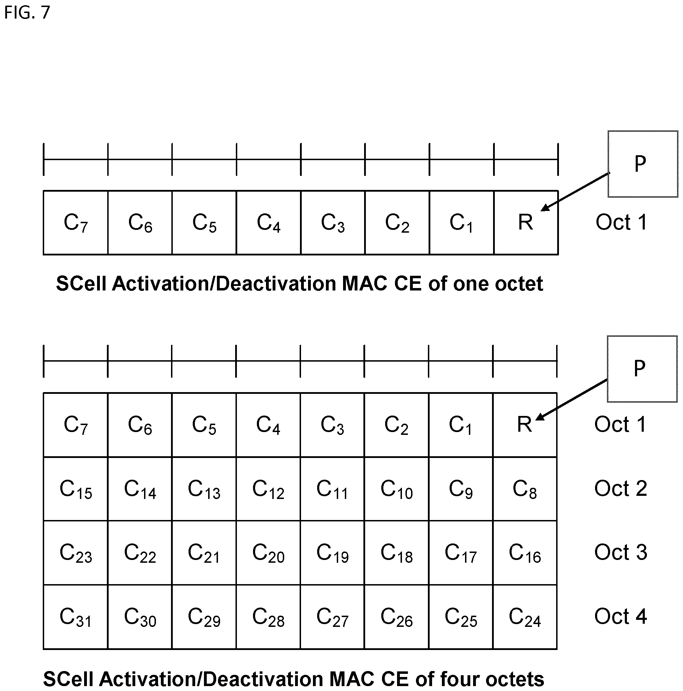

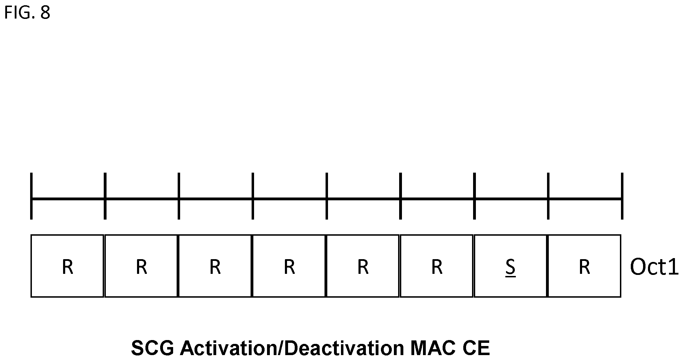

▪The MN may send an Activation notification (including an indication to deactivate the SCG) to the SN, which in turn deactivates the SCG via MAC CE (see FIGS. 7 and 8). Other than the MAC CE, the PDCCH DCI (Downlink Control Information) may generate and notify one bit for SCG activation/deactivation.
▪The MN MAY send a MAC CE directly to the UE 200 containing an indication to deactivate the SCG.

On the other hand, if SRB 3 is configured, UE 200 may send the overheatingAssistance indication in the UEAssistanceInformation described above to SN, and SN may decide to deactivate SCG.

The SN may deactivate the SCG in any of the following ways.

▪SN deactivates the secondaryCellGroupstate in RRC Reconfiguration and sends it to UE 200.
▪The SN may deactivate the SCG using MAC CE.
▪SN sends SN RRC Reconfiguration (deactivate secondaryCellGroupstate or deactivate SpCellState in cellGroupConfig) to scg-CellGroupConfig in CG-Config to MN, including S-NODE MODIFICATION REQUIRED (which may be referred to as SN Modification required). The MN may send an RRC Reconfiguration (encapsulated SN RRC Reconfiguration) to the UE 200.
▪The SN may send an Activation notification (including an indication to deactivate the SCG) to the MN, which in turn may send an indication by the MAC CE to the UE 200 indicating the SCG deactivation. Other than the MAC CE, the PDCCH DCI may generate and notify one bit for SCG activation/deactivation other than the MAC CE.

When the MN receives the Activation notification, it may deactivate the secondaryCellGroupState or mrdc-SecondaryCellGroupState in the RRC Reconfiguration and send it to the UE 200.

The operation described above may be applied not only to the SCG deactivation but also to the SCG activation.

### (3.2) Operation example 2

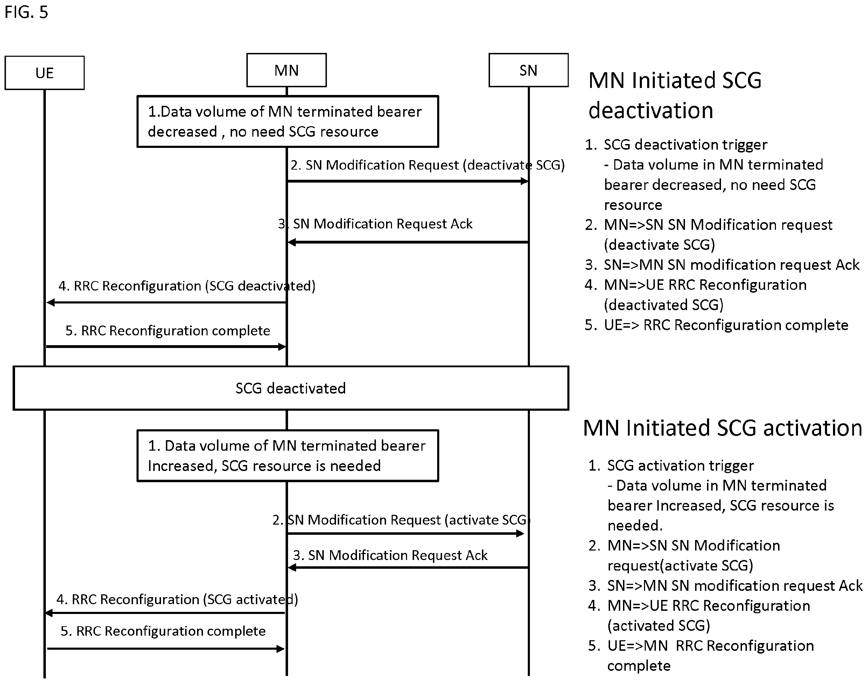

FIG. 5 shows an example of a communication sequence according to the MN initiated SCG deactivation/MN initiated SCG activation procedure according to the operation example 2. Specifically, the upper portion of FIG. 5 shows an example of a communication sequence related to MN initiated SCG deactivation, and the lower portion of FIG. 5 shows a communication sequence related to MN initiated SCG activation.

As shown in FIG. 5, when the amount of data via the MN terminated bearer becomes small and the MN determines that the MN terminated SCG resource is unnecessary, the SCG deactivation may be triggered (steps 1 and 2).

Here, the MN may configure a predetermined threshold and start deactivation of the SCG when the amount of data for the UE 200 falls below the threshold. If the amount of data exceeds a predetermined threshold value (not necessarily the threshold value for deactivation), SCGactivation may be started. As described above, the amount of data may be based on the number of PDU sessions.

The MN may deactivate the SCG in any of the following ways:.

▪The secondaryCellGroupState or mrdc-SecondaryCellGroupState in the RRC Reconfiguration is configured to deactivated and sent to the UE 200 (see FIG. 9).
▪The MN sends an SN Modification request (Deactivate SCG IE and CGConfigInfo in deactivate SCG IE contains deactivate SCG) to the SN to request the SN to deactivate the SCG.

SN configures secondaryCellGroupstate in RRC Reconfiguration to deactivated (or deactivate SpCellState in cellGroupConfig) and sends SN Modification request Ack (Include SN RRCReconfiguration in scg-CellGroupConfig during CG-Confi) back to MN. The SN MAY return an SN Modification request Reject (reject SCG deactivation).

When the Ack is received from the SN, the MN may send an RRC Reconfiguration (encapsulated SN RRC Reconfiguration) to the UE 200.

▪The MN sends an Activation notification (including an indication to deactivate the SCG) to the SN to have the SN determine whether deactivation of the SCG is required. If the SN determines that deactivation of the SCG is required, the SN MAY deactivate the SCG by MAC CE (see FIGS. 7 and 8).

After the SN receives the activation notification, the SN sends the SN RRC Reconfiguration (deactivate secondaryCellGroupstate or deactivate SpCellState in cellGroupConfig) to the scg-CellGroupConfig in the CG-Config, including the SN Modification required (deactivate SCG IE). The MN may send an RRC Reconfiguration (encapsulated SN RRC Reconfiguration) to the UE 200.

▪The MN MAY send a MAC CE directly to the UE 200 containing an indication to deactivate the SCG. Other than the MAC CE, the PDCCH DCI (Downlink Control Information) may generate and notify one bit for SCG activation/deactivation.

The operation described above may be applied not only to the SCG deactivation but also to the SCG activation.

### (3.3) Operation example 3

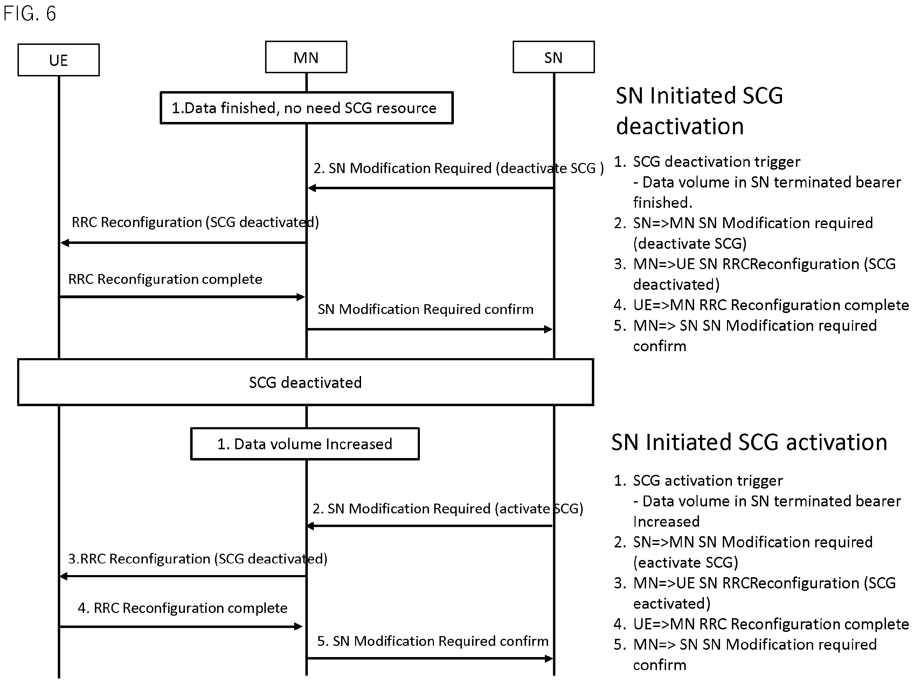

FIG. 6 shows an example of a communication sequence according to the SN initiated SCG deactivation/SN initiated SCG activation procedure according to the operation example 3. Specifically, the upper portion of FIG. 6 shows an example of a communication sequence related to SN initiated SCG deactivation, and the lower portion of FIG. 6 shows a communication sequence related to SN initiated SCG activation.

As shown in FIG. 6, when data transmission/reception via the SN terminated bearer is terminated and the SN determines that the SN terminated SCG resource is unnecessary, the SCG deactivation may be triggered (steps 1 and 2). However, even if data transmission/reception via the SN terminated bearer is not necessarily completed, the amount of data per unit time is (steps 1 and 2).

The SN may deactivate the SCG in any of the following ways.

▪If SRB 3 is configured, SN deactivates secondaryCellGroupstate in RRC Reconfiguration and sends it to UE 200.
▪The SN may deactivate the SCG by MAC CE (see FIGS. 7 and 8).
▪SN sends SN RRC Reconfiguration (deactivate secondaryCellGroupstate or deactivate SpCellState in cellGroupConfig) to scg-CellGroupConfig in CG-Config to MN including SN Modification required (deactivate SCG IE). The MN may send an RRC Reconfiguration (encapsulated SN RRC Reconfiguration) to the UE 200.

MN MAY return S-NODE MODIFICATION REFUSE to SN (reject SCG deactivation).

▪The SN may send an Activation notification (including an indication to deactivate the SCG) to the MN, which in turn may send an indication by the MAC CE to the UE 200 indicating the SCG deactivation. Other than the MAC CE, the PDCCH DCI may generate and notify one bit for SCG activation/deactivation other than the MAC CE.
When the MN receives the Activation notification, it may deactivate the secondaryCellGroupState or mrdc-SecondaryCellGroupState in the RRC Reconfiguration and send it to the UE 200.

The operation described above may be applied not only to the SCG deactivation but also to the SCG activation.

### (3.4) Example of message configuration

FIG. 7 shows a configuration example (unit 1) of the MAC-CE according to the operation example described above. Specifically, the upper line of FIG. 7 shows a configuration example of SCell Activation/Deactivation MAC CE for one octet. The lower part of FIG. 7 shows a configuration example of SCell Activation/Deactivation MAC CE for 4 octets. The configuration of the MAC-CE is specified in Section 3 GPP TS 38.321 6.1.3.10.

The MAC-CE may be transmitted by the SN. As shown in FIG. 7, the reserved (R) bit may be changed to "P ". "P" may refer to the Primary SCell (PSCell) contained in the SCG. PSCell may be interpreted as a type of SCell.

For example, if the P field is configured to "1 ", it may indicate that PSCell is activated, and if the P field is configured to" 0 ", it may indicate that PSCell is deactivated.

FIG. 8 shows a configuration example (unit 2) of the MAC-CE according to an operation example. As shown in FIG. 8, a new MAC-CE used for SCG deactivation may be specified.

The MAC-CE may be transmitted by the MN or SN. "S" means SCG. If the S field is configured to "1", it may indicate that the SCG is activated; if the S field is configured to "0", it may indicate that the SCG is deactivated.

FIG. 9 ~ 14 shows a configuration example of an RRC message according to the above-described operation example. Specifically, FIG. 9 shows a partial configuration example of the RRC Reconfiguration. As shown in FIG. 9, the RRC Reconfiguration may specify a secondaryCellGroupState and mrdc-SecondaryCellGroupState that can support activation/deactivation of the SCG (SCell).

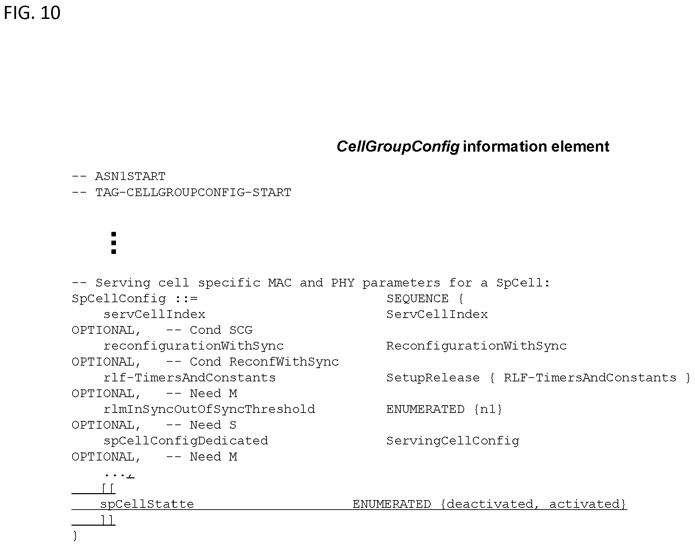

FIG. 10 shows a partial configuration of CellGroupConfig. As shown in FIG. 10, the CellGroupConfig may specify an spCellStatte that can support activation/deactivation of the SCG (SCell).

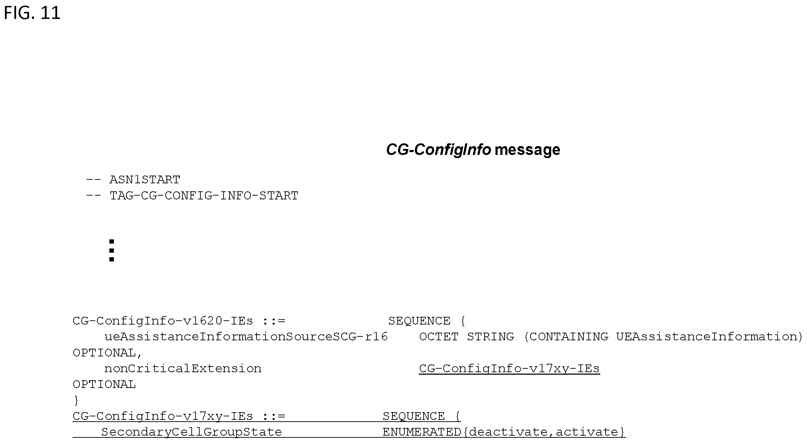

FIG. 11 shows a partial configuration example of CG-ConfigInfo. As shown in FIG. 11, the CG-ConfigInfo may specify a SecondaryCellGroupState that can support activation/deactivation of the SCG (SCell).

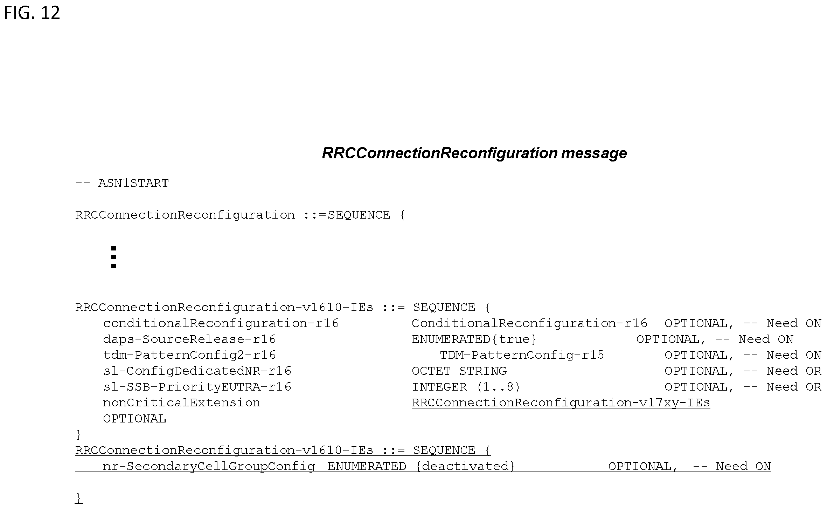

FIG. 12 shows a partial configuration example of RRC Connection Reconfiguration. As shown in FIG. 12, the RRC Connection Reconfiguration may specify an nr-SecondaryCellGroupConfig that can support the deactivation of the SCG (SCell).

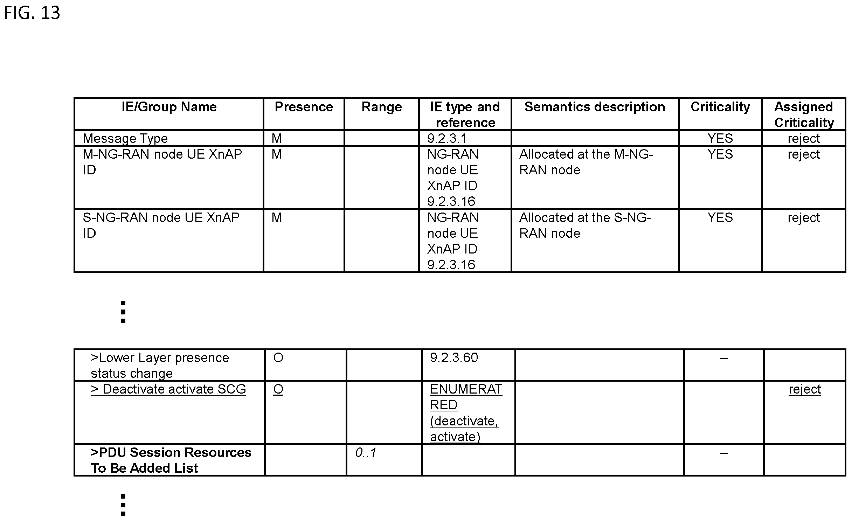

FIG. 13 shows a partial configuration of the S-NODE MODIFICATION REQUEST. As shown in FIG. 13, the S-NODE MODIFICATION REQUEST may specify a Deactivate activate SCG that can support the deactivation of the SCG (SCell).

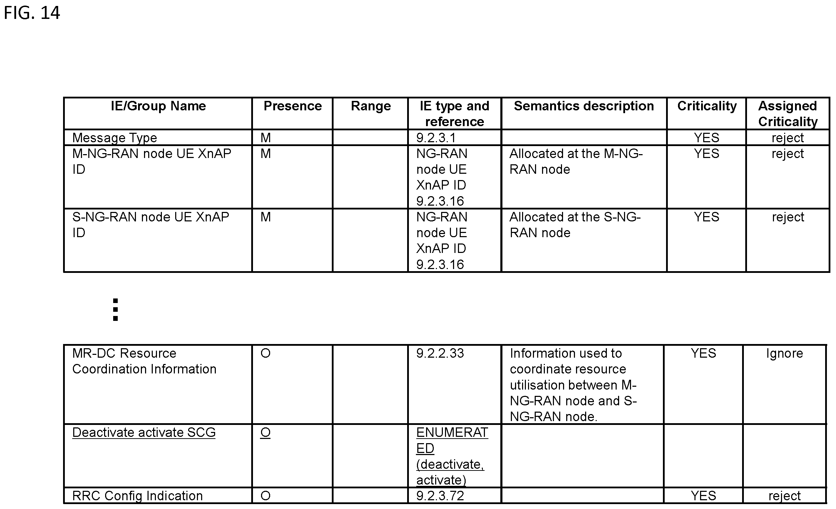

FIG. 14 shows a partial configuration of the S-NODE MODIFICATION REQUIRED. As shown in FIG. 14, the S-NODE MODIFICATION REQUIRED may specify a Deactivate activate SCG that can support the deactivation of the SCG (SCell).

S-NODE MODIFICATION REQUEST and S-NODE MODIFICATION REQUIRED are specified in 3 GPP TS 38.423 9.1.2.5 and 9.1.2.8.

### (3.5) Operation example 4

In this operation example, an operation related to the case where the UE 200 autonomously activates/deactivates the SCG (or SCell) for some reason such as overheating will be described. This operation of the UE 200 may be referred to as UE autonomously trigger SCG deactivation/deactivation.

In the case of UE autonomously trigger SCG deactivation/deactivation, inter-node messages sent and received between the MN and SN must be specified.

In the case of an SN terminated bearer, for example, it is assumed that the UE 200 deactivates the SCG (SCell) in accordance with a state of overload or no uplink data (no UL data), and transmits a message including an inactive indication indicating that the SCG is deactivated to the MN.

In this case, the MN instructs the SN to deactivate the SCG (SCell) by an S-NODE MODIFICATION REQUEST (which may be referred to as an SN modification request). However, for example, when data in the downlink direction is generated on the SN side, the SN requests the MN to activate the SCG by S-NODE MODIFICATION REQUIRED (also referred to as SN modification required). Upon receiving such a request, the MN requests the UE 200 to reactivate the SCG. When such an event is repeated, a so-called ping-pong state occurs.

In the case of an MN-triggered SCG deactivation, the SN may be able to reject the SCG deactivation due to the SN modification request sent from the MN. However, in the case of the SCG deactivation triggered by the UE 200, since the SCG has already been deactivated, if the SN rejects the SCG deactivation by the SN modification request sent from the MN, a state mismatch of the SCG may occur between the UE 200 and the SN.

Hereinafter, an operation example capable of solving such a defect will be described. Specifically, the UE 200, the MN and the SN may operate as follows.

▪(i) When the MN receives the SCG is deactivated from the UE 200, it may send the SCG is deactivated to the SN using the SN modification request.

The SN modification request may include timer information (which may be called a waitTimer) used to wait for transmission of the activation request of the SCG. The UE 200 may also transmit an inactive indication of the SCG to the SN.

▪(ii) When the MN sends an SN modification request to the SN, it may indicate that the SCG has already been deactivated by the autonomous operation of the UE 200 (UE already autonomously deactivated the SCG), but the SN receiving such an SN modification request cannot reject the SCG deactivation by the SN modification request.

Alternatively, the SN may configure only deactivated in the SCG activation/deactivation result flag included in the SN modification request ack returned to the MN.

When the MN transmits the SN modification request as described above to the SN, it may assume that the SN cannot reject the SCG deactivation.

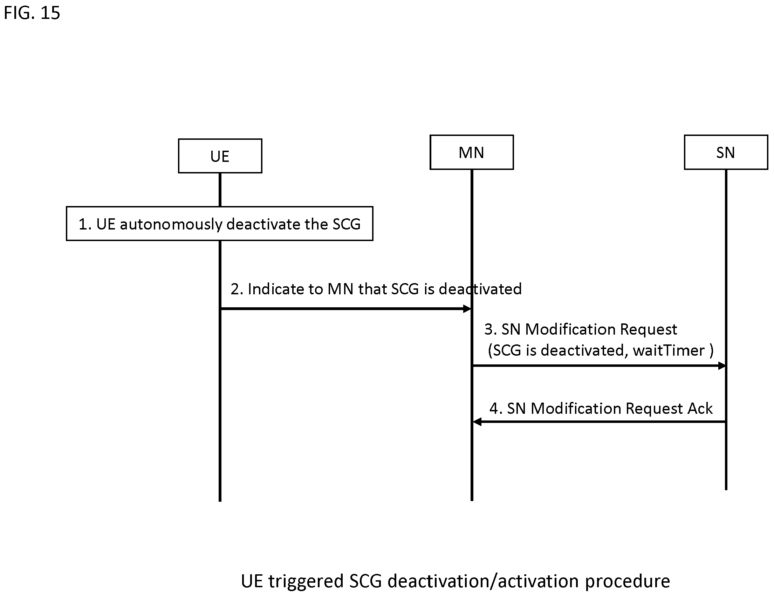

FIG. 15 shows an example of a communication sequence according to the UE autonomously triggered SCG deactivation procedure according to the operation example 4.

As shown in FIG. 15, the UE 200 may autonomously deactivate the SCG for any reason (step 1). For example, the reasons include the overheating of the UE 200, no UL data, power saving, and the UE S-RLF (radio link failure of the SCG) in which the SCG is deactivated.

The UE 200 may notify the MN that the SCG is deactivated (step 2). Specifically, the UE 200 may notify the MN that the SCG is being deactivated by an RRC message, MAC-CE, or physical layer (L1) signaling. As described above, the UE 200 may notify the SN of similar information.

The MN may send an SN modification request to the SN in response to the notification from the UE 200 (step 3). Specifically, the MN may send an SN modification request to the SN that includes a SCG is deactivated. Note that other inter-node messages (For example, S-NODE MODIFICATION REQUEST, S-NODE MODIFICATION REQUEST) may be used instead of the SN modification request.

The MN may also include a waitTimer value in the SN modification request. The waitTimer may be interpreted as a configured value of a timer that waits for a predetermined period of time for the SN to send an SCG activation request, specifically, an S-NODE MODIFICATION REQUIRED (SN modification required). That is, the SN cannot send an SCG activation request, e.g., an S-NODE MODIFICATION REQUIRED (SN modification required) containing an SCG activation request, until the time configured by the waitTimer expires.

The waitTimer may start when the SN receives an SN modification request that includes a SCG is deactivated. The waitTimer may be stopped, for example, when the SN receives a RACH request from the UE 200 (when the UE 200 sends a RACH request to the SN) .

The value of waitTimer may not be explicitly indicated by the MN. For example, the SN may initiate a waitTimer in response to receiving an SN modification request. The configured value of the waitTimer may be configured by signaling of an upper layer or the like, or may be configured in advance to the SN.

The SN may return the SN modification request Ack to the MN upon receipt of the SN modification request (step 4).

In step 2, a timer may be provided on the MN side. Specifically, when the MN receives an SCG is deactivated from the UE 200, a waitTimer may be started.

Even if DL data is generated in the MN terminated bearer or an SCG activation request is generated from the SN before the expiration of the wait Timer, the MN does not transmit the SCG activation request to the UE 200. If the SCG activation request is transmitted from the SN due to the SN modification required before the expiration of the wait Timer, the MN may return the SN modification refuse to the SN.

### (4)Operational effects

According to the embodiment described above, the following effects are obtained. Specifically, the UE 200 can send a message (UEAssistanceInformation) to the network containing a request to deactivate the SCG.

The eNB 100 A (MN) determines whether or not deactivation of the SCG is necessary based on the amount of data for the UE 200 in the MN, and if deactivation is necessary, can transmit a message (For example, S-NODE MODIFICATION REQUEST) including a request for deactivation of the SCG.

Further, the gNB 100 B (SN) determines whether or not the deactivation of the SCG is necessary based on the amount of data for the UE 200 in the SN, and can transmit a message including a request for the deactivation of the SCG when the amount of data falls below a threshold.

Therefore, the eNB 100 A, the gNB 100 B, and the UE 200 can clearly and reliably determine the timing for activating/deactivating the SCG, and can activate (trigger) the activation/deactivation of the SCG at an appropriate timing. Thus, efficient SCG activation/deactivation can be more reliably performed.

In this embodiment, when the radio bearer (SRB 3) for a specific message in the dual connectivity state of the UE 200 is configured, a message including a deactivation request can be transmitted to the SN. Therefore, appropriate activation/deactivation of the SCG in accordance with the state of the dual connectivity can be realized.

In this embodiment, for example, when the eNB 100 A (MN) receives the SCG is deactivated from the UE 200, it can send an SN modification request including the SCG is deactivated to the gNB 100 B (SN).

When the SN receives the SN modification request including the SCG is deactivated, the SN can stop sending the SCG activation request until, for example, a prescribed time elapses according to the waitTimer. In this case, the MN may include in the SN modification request timer information (a configured value of waitTimer) used to wait for transmission of the SCG activation request.

Therefore, even when the UE 200 autonomously deactivates the SCG, it is possible to avoid a ping-pong state in which a request for activation/deactivation of the SCG is repeated and a state mismatch of the SCG between the UE 200 and the SN.

### (5)Other Embodiments

Although the contents of the present invention have been described by way of the embodiments, it is obvious to those skilled in the art that the present invention is not limited to what is written here and that various modifications and improvements thereof are possible.

For example, in the above embodiment, EN-DC in which MN is eNB and SN is gNB has been described as an example, but other DC may be used as described above. Specifically, it may be NR-DC where MN is gNB and SN is gNB, or NE-DC where MN is gNB and SN is eNB.

Although the above-described embodiment mainly describes an operation example in the case of deactivating the SCG, the operation example may be applied to the activation of the SCG or the activation/deactivation of the SCell (including the PSCell).

Further, the block configuration diagrams (FIGS. 2 and 3) used for the description of the above-described embodiment show blocks in units of functions. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

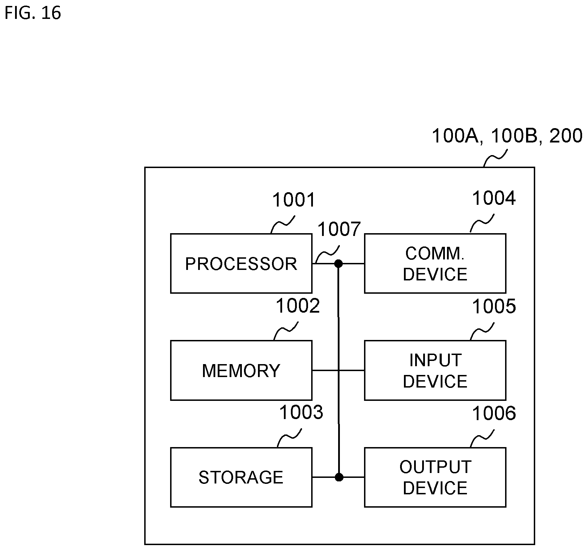

Further, the above-mentioned eNB 100 A, gNB 100 B and UE 200 (the apparatus) may function as a computer that performs processing of the radio communication method of the present disclosure. FIG. 16 is a diagram showing an example of a hardware configuration of the apparatus. As shown in FIG. 16, the device may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIG. 2.3) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, and the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up " and" down " may be replaced with words corresponding to communication between terminals (For example, "side".). For example, terms an uplink channel, a downlink channel, or the like may be read as a side channel.

Similarly, the mobile station in the present disclosure may be read as a base station. In this case, the base station may have the function of the mobile station.

A radio frame may be composed of one or more frames in the time domain.

Each frame or frames in the time domain may be referred to as a subframe. A subframe may be further configured by one or more slots in the time domain.

The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the sub-frame and TTI may be a sub-frame (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain.

The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or" decision " may include regarding some action as "judgment " or" decision ". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 E-UTRAN
30 NG RAN
100A eNB
100B gNB
110 radio communication unit
120 RRC processing unit
130 DC processing unit
140 control unit
200 UE
210 radio communication unit
220 RRC processing unit
230 DC processing unit
240 control unit
1001 processor
1002 memory
1003 storage
1004 communication device
1005 input device
1006 output device
1007 bus

## Claims

1. A radio base station comprising:
a reception unit that receives an inactive indication of a secondary cell group from a terminal; and
a transmission unit that, when the inactive indication is received, transmits a message including the inactive indication of the secondary cell group to the secondary node.

2. The radio base station according to claim 1, wherein the transmission unit transmits the message including timer information used to wait for transmission of an activation request of the secondary cell group.

3. A radio base station comprising:
a reception unit that receives a message including an inactive indication of a secondary cell group; and
a control unit that, when the message is received, stops transmitting an activation request of the secondary cell group until a predetermined time elapses.

4. A radio communication system including a terminal and a radio base station, wherein
the terminal comprises a transmission unit that transmits an inactive indication of a secondary cell group; and
the radio base station comprises:
a reception unit that receives the inactive indication; and
a transmission unit that, when the inactive indication is received, transmits a message including the inactive indication of the secondary cell group to the secondary node.

5. A radio communication method comprising the steps of:
receiving, by a radio base station, an inactive indication of a secondary cell group from a terminal; and
transmitting, by the radio base station, when the radio base station receives the inactive indication, a message including the inactive indication of the secondary cell group to the secondary node.
